# EUROPEAN PATENT SPECIFICATION

(11) **EP 1 120 946 B1**
(45) Date of publication and mention of the grant of the patent: **22.06.2005**
(21) Application number: 00830044.4
(22) Date of filing: 26.01.2000
(51) Int. Cl.: H04L 29/06, H04L 12/28

(54) **A method for the conditional routing of a request for access to an internet page**
Verfahren für konditionale Leitweglenkung von Internet Zugriffsanforderungs
Procédé pour l'acheminement conditionnelle d'un demand d'access à une page Internet

(43) Date of publication of application: 01.08.2001
(73) Proprietor: Telecom Italia Mobile S.P.A., 10122 Torino (IT)
(72) Inventor: Sentinelli, Mauro, Via Luigi Rizzo 22 00136 Roma (IT)
(74) Representative: Siniscalco, Fabio

(56) References cited:
- WO-A-98/47090
- US-A- 5 572 643
- US-A- 5 774 869
- US-A- 5 812 819

## Description

The present invention relates to a method for the conditional routing of a request for access to an Internet page.

The expression "Internet page" is intended to define, in general, a multimedia document (which may contain text, graphics elements, still or moving images, sounds, as well as hypertext connections to other pages) which can be transferred to the Internet network in accordance with an HTTP protocol. This expression is also intended to define below pages of intranet networks, that is, of private networks based on Internet technology.

As is known, a user who wishes to access an Internet page has to establish a connection between his computer and an access system provided by an Internet service provider. This system generally comprises a server having the functions of receiving and assigning IP addresses, an authentication and logging unit, and an access-control node.

In order to establish the connection, the user sends his identification data, that is, his user identification name (or "userid") and a personal recognition word (a password), to the server of the access system. This data is authenticated by comparison with data stored in the authentication and logging unit and, if the comparison has a positive outcome, the server assigns to the user an IP address, that is, an address by means of which he can be recognized by other servers of the network and can thus access the services supplied thereby. At this point, the user can send a request for access to an Internet page; this request is forwarded by the server of the access system to the server of the node at which the page requested is available and the page is sent to the computer of the user who requested it.

There is sometimes a need for the Internet service provider to give users technical or service information or commercial or advertizing information, or a combination of the two types of information. One method of providing this information is to provide an Internet page, possibly with hypertext connections, and to persuade users to access this page once they establish a connection to the service provider's access system.

This latter option can be made automatic if the user's "browser" is set up to request access to that page at the start of each connection. The provider can only advise his clients to activate this setting, or to access the above-mentioned page with the frequency considered appropriate.

American patent US 5 774869 describes a method where a user requests an Internet page, automatically gets an sponsor page with a questionnaire to fill in. When all the questions are answered the user gets the requested page.

The object of the present invention is to provide a method of routing requests for access to Internet pages by means of which a user who has established a connection with the service provider and is making his first request for access, is connected to a predetermined Internet page, before he can access the page requested.

This object is achieved by implementing the method defined in general in Claim 1.

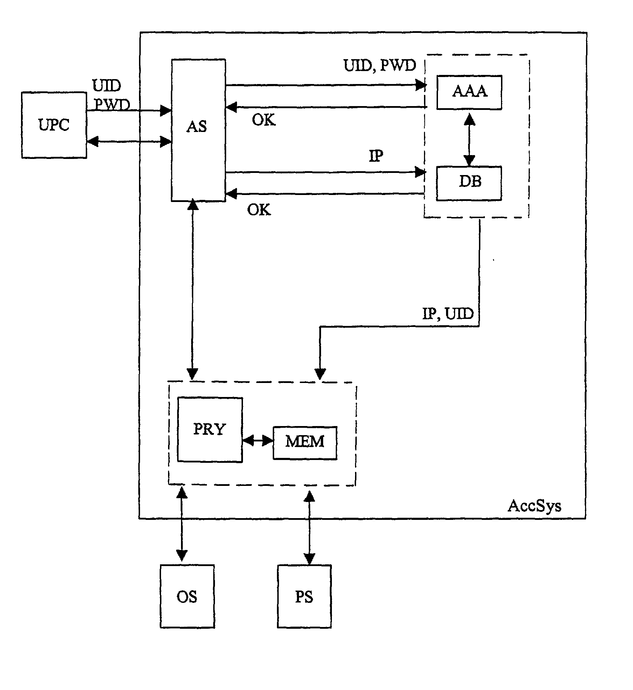

The invention will be understood better from the following detailed description of a non-limiting embodiment thereof given with reference to the appended drawing, in which the sole figure is a block diagram showing the connections and the interactions between a user's computer and an Internet access system, as well as the connections and the interactions between components of the latter system.

As can be seen in the drawing, an access system, indicated AccSys, of a provider, that is, of an Internet service provider, comprises a server AS which is constructed and programmed to receive access requests from the provider's clients and to assign their IP addresses, an authentication and logging unit AAA with which a database (DB) is associated and which is connected to the server AS, and an access-control or proxy node PRY, with which a memory MEM is associated and which is connected to the server AS and to the authentication unit AAA.

A client of the provider, identified in the drawing by a computer UPC, who wishes to make use of one of the provider's services, in the specific case, who wishes to access an Internet page, establishes a connection with the server AS, for example, by means of a modem and a telephone line, and sends the server AS his "userid" (UID) and his "password" (PWD).

This data is transmitted by the server AS to the authentication and logging unit AAA where it is compared with data stored in the database DB which contains the identification data of all of the provider's clients.

If the comparison has a positive outcome, the unit AAA sends the server AS a consent signal (OK in the drawing).

The server AS now assigns an IP address to the user. The IP address may be public or private, that is, a numerical address which identifies the provider on the Internet, or a numerical address which identifies the client within a private network, enabling data to be exchanged between the provider's server and other servers, or nodes, connected to the Internet, or between the client's computer and other computers of the private network, respectively. In this example, it is assumed that the address IP is a private address.

The unit AAA sends the IP address and the "userid" (UID) to the node PRY, which enters it in the memory MEM and sends a signal (OK) to the server AS to confirm the logging of the client's data.

To allow the client access to an Internet page, it would suffice to send to the node PRY solely the IP address assigned to the client, since this address alone constitutes a code which unambiguously identifies the client in the current connection. It is preferable, however, to associate the "userid" with the IP address when the node PRY also has to perform other functions. In particular, if the association between the IP address and the UID is available, the node PRY can distribute it to other applications which can thus supply personalized services by recognizing a certain user from the IP address contained in his requests.

As a result of the consent received from the unit AAA, the server AS is enabled to send the request for access to an Internet page from the user UPC to the node PRY.

The node PRY checks whether the user code (userid and IP) is present in the memory MEM associated therewith. The user code previously stored is found in the memory MEM. As a result, the user UPC is sent a command which brings about a forced connection to a network node, indicated PS in the drawing, which is generally other than that containing the page requested. It does, however, contain the page predetermined by the provider, which is sent to the user's computer UPC. Simultaneously with the sending of the predetermined page, the node PRY cancels the user code from the memory MEM.

When, after he has seen the predetermined page sent to him by the provider's network node PS, the user UPC decides to return to the initial request or to a request for access to any other Internet page, the node PRY performs the user code check again and, after confirming that the code is not present in the memory, sends the request to the network node, indicated OS in the drawing, containing the requested page. As long as the user's computer UPC remains connected to the access system AccSys, the user can therefore request access to any Internet page without the above-described procedure of connection to the node PS being repeated, naturally, unless he himself requests access to the page contained in that node.

It will be noted that the method of the invention can be implemented without the addition of specific apparatus but by making use of the apparatus normally present in the access system. In particular, the conditional routing operation is performed with the use of the access-control node (the proxy server PRY) which normally performs the function of a mediator between the provider's access system and the network, assigning public IP addresses to the requests for access to the network which are presented with private IP addresses.

## Claims

1. A method for the conditional routing of a request by a user for access to an Internet page by means of a connection of a user's computer (UPC) to an access system (AccSys) comprising a server (AS) having the function of receiver and the function of assigning IP addresses, an authentication and logging unit (AAA), and an access control node (PRY) with a memory (MEM), the method comprising the following steps:
sending data (UID, PW) identifying the user from the user's computer (UPC) to the server (AS) of the access system (AccSys) and from the server (AS) to the authentication and logging unit (AAA),
authenticating the user's identification data (UID, PW) by comparison with data stored in the authentication and logging unit (AAA),
assigning an IP address to the user,
entering in the memory (MEM) of the access control node (PRY) a user code comprising the IP address assigned to the user,
sending a request for access to an Internet page from the user's computer (UPC) to the server (AS),
examining the contents of the memory (MEM) of the access control node (PRY) to check whether the user code is present in the memory (MEM) and alternatively performing one of the following steps:
establishing a connection between the user's computer (UPC) and a network node (PS) containing a predetermined Internet page, sending the latter to the user's computer (UPC) and cancelling the user code from the memory (MEM), if the user code is present in the memory (MEM),
establishing a connection between the user's computer (UPC) and a network node (OS) connected to the Internet, containing the Internet page to which access has been requested, and sending the latter to the user, if the user code is not present in the memory (MEM).

2. A method according to Claim 1, in which the user code comprises at least a portion (UID) of the user's identification data.

3. A method according to any one of the preceding claims, in which the step of entering a user code in the memory (MEM) comprises the transmission of the user code from the authentication and logging unit (AAA) to the access control node (PRY).

## Patentansprüche

1. Ein Verfahren für das bedingte Routing einer Anforderung durch einen Benutzer für einen Zugriff auf eine Internetseite durch eine Verbindung eines Benutzercomputers (UPC) mit einem Zugriffssystem (AccSys), das einen Server (AS) mit der Funktion eines Empfängers und der Funktion des Zuweisens von IP-Adressen, eine Authentifizierungs- und Registrierungseinheit (AAA) und einen Zugriffssteuerknoten (PRY) mit einem Speicher (MEM) umfaßt, wobei das Verfahren folgende Schritte umfaßt:
Senden von Daten (UID, PW), die den Benutzer identifizieren, von dem Benutzercomputer (UPC) zu dem Server (AS) des Zugriffssystems (AccSys) und von dem Server (AS) zu der Authentifizierungs- und Registrierungseinheit (AAA),
Authentifizieren der Benutzeridentifikationsdaten (UID, TW) durch einen Vergleich mit Daten, die in der Authentifizierungs- und Registrierungseinheit (AAA) gespeichert sind,
Zuweisen einer IP-Adresse zu dem Benutzer,
Eingeben eines Benutzercodes, der die IP-Adresse umfaßt, die dem Benutzer zugewiesen ist, in den Speicher (MEM) des Zugriffssteuerknotens (PRY),
Senden einer Anforderung für einen Zugriff auf eine Internetseite von dem Benutzercomputer (UPC) zu dem Server (AS),
Überprüfen des Inhalts des Speichers (MEM) des Zugriffssteuerknotens (PRY), um zu prüfen, ob der Benutzercode in dem Speicher (MEM) vorliegt, und alternativ Ausführen eines der folgenden Schritte:
Herstellen einer Verbindung zwischen dem Benutzercomputer (UPC) und einem Netzwerkknoten (PS), der eine vorbestimmte Internetseite enthält, Senden der letzteren an den Benutzercomputer (UPC) und Löschen des Benutzercodes von dem Speicher (MEM), falls der Benutzercode in dem Speicher (MEM) vorliegt,
Herstellen einer Verbindung zwischen dem Benutzercomputer (UPC) und einem Netzwerkknoten (OS), der mit dem Internet verbunden ist, der die Internetseite enthält, für die ein Zugriff angefordert wurde, und Senden der letzteren an den Benutzer, falls der Benutzercode nicht in dem Speicher (MEM) vorliegt.

2. Ein Verfahren gemäß Anspruch 1, bei dem der Benutzercode zumindest einen Abschnitt (UID) der Benutzeridentifikationsdaten umfaßt.

3. Ein Verfahren gemäß einem der vorhergehenden Ansprüche, bei dem der Schritt des Eingebens eines Benutzercodes in den Speicher (MEM) die Übertragung des Benutzercodes von der Authentifizierungs- und Registrierungseinheit (AAA) zu dem Zugriffssteuerknoten (PRY) umfaßt.

## Revendications

1. Procédé pour l'acheminement conditionnel d'une demande émanant d'un utilisateur pour accéder à une page Internet au moyen d'une connexion d'un ordinateur de l'utilisateur (UPC) à un système d'accès (AccSys) comprenant un serveur (AS) pouvant remplir la fonction de récepteur et la fonction d'affectation d'adresses IP, une unité d'authentification et d'enregistrement de session (AAA), et un noeud de commande d'accès (PRY) ayant une mémoire (MEM), le procédé comprenant les étapes suivantes :
l'envoi de données (UID, PW) identifiant l'utilisateur entre l'ordinateur de l'utilisateur (UPC) et le serveur (AS) du système d'accès (AccSys) et entre le serveur (AS) et l'unité d'authentification et d'enregistrement de session (AAA),
l'authentification des données d'identification de l'utilisateur (UID, PW) par comparaison à des données stockées dans l'unité d'authentification et d'enregistrement de session (AAA),
l'affectation à l'utilisateur d'une adresse IP, le chargement dans la mémoire (MEM) du noeud de commande d'accès (PRY) d'un code utilisateur comprenant l'adresse IP affectée à l'utilisateur,
l'envoi d'une demande d'accès à une page Internet de l'ordinateur de l'utilisateur (UPC) au serveur (AS),
l'examen du contenu de la mémoire (MEM) du noeud de commande d'accès (PRY) pour vérifier si oui ou non le code utilisateur est présent dans la mémoire (MEM) et effectuer de façon alternée l'une des étapes suivantes :
l'établissement d'une connexion entre l'ordinateur de l'utilisateur (UPC) et le noeud du réseau (PS) contenant une page Internet prédéterminée, l'envoi de cette dernière à l'ordinateur de l'utilisateur (UPC) et l'effacement du code de l'utilisateur de la mémoire (MEM) si le code de l'utilisateur est présent dans la mémoire (MEM),
l'établissement d'une connexion entre l'ordinateur de l'utilisateur (UPC) et un noeud du réseau (OS) connecté à l'Internet, contenant la page Internet à laquelle un accès a été demandé, et l'envoi de cette dernière à l'utilisateur si le code de l'utilisateur n'est pas présent dans la mémoire (MEM).

2. Procédé selon la revendication 1, dans lequel le code de l'utilisateur constitue au moins une partie (UID) des données d'identification de l'utilisateur.

3. Procédé selon l'une quelconque des revendications précédentes, dans lequel l'étape de chargement d'un code utilisateur dans la mémoire (MEM) comprend la transmission du code utilisateur de l'unité d'authentification et d'enregistrement de session (AAA) au noeud de commande d'accès (PRY).
